# EUROPEAN PATENT APPLICATION

(11) **EP 4 660 033 A1**
(43) Date of publication of application: **10.12.2025**
(21) Application number: 25175587.2
(22) Date of filing: 12.05.2025
(51) Int. Cl.: B60W 10/06, B60W 10/11, B60W 30/188, F16H 59/78

(54) **POWER TRAIN CONTROL DEVICE, AND VEHICLE**

(30) Priority: 03.06.2024 JP 2024089898; 28.01.2025 JP 2025012013
(71) Applicant: MAZDA MOTOR CORPORATION, Hiroshima 730-8670 (JP)
(72) Inventor: Ito, Tatsuhiro, Fuchu-cho, Aki-gun,, 730-8670 (JP); Sunagare, Yugou, Fuchu-cho, Aki-gun,, 730-8670 (JP); Hayashi, Shunichiro, Fuchu-cho, Aki-gun,, 730-8670 (JP); Hashimoto, Kenichiro, Fuchu-cho, Aki-gun,, 730-8670 (JP); Ohshita, Atsushi, Fuchu-cho, Aki-gun,, 730-8670 (JP); Amami, Yuto, Fuchu-cho, Aki-gun,, 730-8670 (JP); Kawahara, Naoto, Fuchu-cho, Aki-gun,, 730-8670 (JP); Higo, Kiminori, Fuchu-cho, Aki-gun,, 730-8670 (JP)
(74) Representative: Müller-Boré & Partner Patentanwälte PartG mbB

(57) **Abstract**

Provided is a power train control device 10 for a vehicle including an exhaust gas purification apparatus 52 and an automatic transmission 3, the vehicle traveling by controlling an engine 2 and the automatic transmission 3. The power train control device 10 includes an ECM 11 and a TCM 12. The ECM 11 performs entire range theoretical air-fuel ratio operation control, and also performs intake air charge amount limit control when an intake air charge amount reaches an upper limit value that is set to prevent a temperature of a three-way catalyst from exceeding an allowable temperature. The TCM 12 performs automatic shift control, and performs forced up-shift control of forcibly shifting up the automatic transmission 3 when an engine revolution speed reaches a revolution limit. When the ECM 11 limits the intake air charge amount, the TCM 12 performs revolution limit change control of lowering the revolution limit.

## Description

### [Technical Field]

The present invention relates to a power train control device for a vehicle that mounts an engine therein, the engine operating at a theoretical air-fuel ratio over the entire operation range.

### [Background Art]

In recent years, regulations on emissions (exhaust emissions) have been tightened from the viewpoint of protecting the environment. Vehicles that travel by driving of engines (so-called engine vehicles) are a main target of emissions regulations because such vehicles emit exhaust gas.

Thus, for engine vehicles, attempts have been already made to enhance performance with emissions (emission performance). In the case of an engine vehicle that uses gasoline as fuel, a three-way catalyst can effectively remove main exhaust emissions of the vehicle (hydrocarbon, carbon monoxide, and nitrogen oxide).

Accordingly, the three-way catalyst is one of effective means for engine vehicles of this kind. Currently, exhaust gas purification apparatuses that uses a three-way catalyst are widely used.

An exhaust gas purification rate of the three-way catalyst is affected by air-fuel ratio (A/F). That is, to obtain a high purification rate, it is necessary to stabilize an air-fuel ratio at a theoretical air-fuel ratio (14.7) or within a narrow range around the theoretical air-fuel ratio (a so-called window). For this reason, to achieve advanced emission performance such as zero emission in an engine vehicle, it is required to perform operation within the window over the entire operation range of the engine (referred to as "entire range theoretical air-fuel ratio operation" in this Description).

In contrast, when a three-way catalyst remains at an excessively high temperature, the three-way catalyst is thermally deteriorated and hence durability of the three-way catalyst is reduced. Accordingly, in an exhaust gas purification apparatus that uses the three-way catalyst, it is necessary to perform temperature control in such a way as to prevent the temperature of the three-way catalyst from exceeding an allowable temperature for the three-way catalyst. However, when the entire range theoretical air-fuel ratio operation is performed, combustion takes place efficiently, increasing the amount of heat in exhaust gas. Therefore, in an operation range in which the amount of heat in exhaust gas is at the maximum, that is, in a range with a high engine revolution speed and a high load, there is a possibility of the temperature of the three-way catalyst exceeding the allowable temperature.

In general, in an operation range in which the temperature of the three-way catalyst is likely to exceed the allowable temperature, a technique of increasing fuel (a so-called enrichment control) is used. With this technique, it is possible to reduce the amount of heat in exhaust gas by making use of heat of vaporization of fuel and hence it is possible to suppress thermal deterioration of the three-way catalyst. However, the theoretical air-fuel ratio cannot be achieved and hence exhaust emissions cannot be effectively removed. Accordingly, advanced emission performance cannot be achieved.

To solve such a problem, a technique is proposed in which even in the case where the entire range theoretical air-fuel ratio operation is performed, the temperature of the three-way catalyst is prevented from exceeding the allowable temperature (Patent Literature 1). In this technique, a second throttle valve is provided in addition to an original throttle valve. By adjusting this second throttle valve, the upper limit of the throttle opening degree is regulated in such a way as to prevent the temperature of the three-way catalyst from exceeding the allowable temperature.

### [Citation List]

### [Patent Literature]

[Patent Literature 1] Japanese Patent Laid-Open No. 8-158896

### [Summary]

### [Problems to be Solved]

When the technique of Patent Literature 1 is applied, it is possible to prevent the temperature of the three-way catalyst from exceeding the allowable temperature even in the case where the entire range theoretical air-fuel ratio operation is performed.

However, in the technique of Patent Literature 1, the throttle opening degree is regulated. Therefore, the intake air charge amount becomes lower than a required amount, thus causing insufficient output from the engine. As a result, situations may occur in which the vehicle speed does not increase even when the accelerator is depressed. An automatic transmission is not shifted up if the vehicle speed is not increased. The vehicle cannot travel according to the manipulation performed by the driver and hence the driving performance of the vehicle decreases.

In view of the above, this Description discloses a technique that can perform an entire range theoretical air-fuel ratio operation with a three-way catalyst held at an appropriate temperature, and that can also suppress the lowering of the driving performance of the vehicle.

### [Means for Solving the Problems]

The invention is defined in claim 1. Particularly, a power train control device for a vehicle is provided. The vehicle includes an engine that operates by burning of gasoline, an exhaust gas purification apparatus that purifies, using a three-way catalyst, exhaust gas exhausted from the engine, and an automatic transmission that may automatically change an output from the engine. The vehicle travels by controlling the engine and the automatic transmission.

The power train control device includes an engine control unit and a transmission control unit.

The engine control unit performs an entire range theoretical air-fuel ratio operation control of controlling operation of the engine such that a theoretical air-fuel ratio is achieved over an entire operation range. The engine control unit also performs intake air charge amount limit control of limiting an intake air charge amount when the intake air charge amount reaches an upper limit value that is set to prevent a temperature of the three-way catalyst from exceeding an allowable temperature.

The transmission control unit performs automatic shift control of controlling an action of the automatic transmission based on a shift map set based on an accelerator opening degree and a vehicle speed. The transmission control unit also performs forced up-shift control of forcibly shifting up the automatic transmission when an engine revolution speed reaches a revolution limit that is set to prevent revolution of the engine from exceeding an allowable limit.

When the engine control unit limits the intake air charge amount, the transmission control unit performs revolution limit change control of lowering the revolution limit.

That is, according to this power train control device, the entire range theoretical air-fuel ratio operation control is performed and hence it is possible to always maintain a high purification rate of the exhaust gas purification apparatus. Accordingly, advanced emission performance can be achieved.

The intake air charge amount limit control is performed and hence even when the entire range theoretical air-fuel ratio operation control is performed, it is possible to suppress thermal deterioration of the three-way catalyst. However, as described above, when the intake air charge amount is limited by the intake air charge amount limit control, output from the engine becomes insufficient. As a result, situations may occur in which the vehicle speed does not increase even when the accelerator is depressed. The vehicle cannot travel according to the manipulation performed by the driver and hence the driving performance of the vehicle decreases.

To solve such a problem, this power train control device is configured such that when the engine revolution speed reaches the revolution limit, to prevent excessive revolution of the engine, the forced up-shift control of forcibly shifting up the automatic transmission is performed. The power train control device is devised such that by utilizing this forced up-shift control, power from the engine can be obtained and the vehicle speed can be increased even when the intake air charge amount limit control is performed.

That is, when the engine control unit limits the intake air charge amount, the transmission control unit performs the revolution limit change control of lowering the revolution limit. By lowering the revolution limit, the engine revolution speed reaches the revolution limit at a normal engine revolution speed, which is lower than excessive revolution. When the engine revolution speed reaches this revolution limit, the automatic transmission is forcibly shifted up by the forced up-shift control.

Therefore, the gear ratio of the automatic transmission is reduced and the engine revolution speed is reduced with the vehicle speed maintained. When the engine revolution speed is reduced, limitation on the intake air charge amount is eased in turn. Accordingly, the engine can obtain power. The engine revolution speed and the vehicle speed are increased and hence it is also possible to suppress the lowering of the driving performance of the vehicle.

Different amounts of decrease in the revolution limit in the revolution limit change control may be set for a high gear stage and a low gear stage of the automatic transmission, and an amount of decrease for the high gear stage may be greater than an amount of decrease for the low gear stage.

With such a configuration, a lower speed stage can increase a vehicle speed to a high vehicle speed more quickly. The lowering of the driving performance of the vehicle can be further suppressed.

A smaller upper limit value of the intake air charge amount may be set for a larger value of at least any one of the engine revolution speed, an intake air temperature, and a temperature of cooling water in the engine.

These state values have a high correlation with the upper limit value of the intake air charge amount. That is, the amount of exhaust heat from the engine increases as the engine revolution speed increases, leading to an increase in the temperature of the three-way catalyst. Accordingly, a smaller upper limit value of the intake air charge amount, that is, stricter limitation, may be set for a higher engine revolution speed.

It is possible to achieve both suppression of thermal deterioration of the three-way catalyst and suppression of a reduction in output from the engine in a well-balanced manner. The same also applies to the intake air temperature and the temperature of cooling water in the engine.

When it is determined that there is a high possibility of the temperature of the three-way catalyst exceeding the allowable temperature, the upper limit value of the intake air charge amount may be calculated based on three values consisting of the engine revolution speed, the intake air temperature, and the temperature of cooling water in the engine, and based on one or more predetermined base state values.

That is, in the high risk state, there is a high possibility of the intake air charge amount being limited. The limitation on the intake air charge amount reduces the output from the engine. Accordingly, to suppress a reduction in output from the engine, it is preferable that the upper limit value of the intake air charge amount have high reliability.

Thus, in this power train control device, three state values having a high correlation are detected. Then, the upper limit value of the intake air charge amount is calculated based on these detected values and the predetermined base state value(s). With such a configuration, it is possible to obtain the upper limit value of the intake air charge amount with high estimation accuracy. It is possible to suppress a reduction in output from the engine.

When it is determined that there is a low possibility of the temperature of the three-way catalyst exceeding the allowable temperature, the upper limit value of the intake air charge amount may be calculated based on two values consisting of the engine revolution speed and the intake air temperature, and based on the predetermined base state value(s).

The temperature of the three-way catalyst greatly depends particularly on engine revolution speed and intake air temperature. In the low risk state, there is a low possibility of the intake air charge amount being limited. Accordingly, with this calculation method, it is possible to calculate the upper limit value of the intake air charge amount having required and sufficient reliability with a simple arithmetic operation. This method is efficient and can reduce burden on the arithmetic operation for control.

In the case where the engine includes a swirl control valve that changes a strength of a swirl flow generated in a combustion chamber by adjusting an opening degree of the swirl control valve, the upper limit value of the intake air charge amount may be corrected based on an amount of deviation of the opening degree of the swirl control valve relative to the base state value.

A deviation in the opening degree of the swirl valve causes a variation in the calculation of the upper limit value of the intake air charge amount. Accordingly, by correcting the upper limit value of the intake air charge amount based on the amount of deviation, it is possible to estimate the upper limit value of the intake air charge amount with higher accuracy.

In the case where the engine includes a variable valve timing mechanism that enables adjustment of an opening/closing timing of an intake valve and/or an exhaust valve, the upper limit value of the intake air charge amount may be corrected based on an amount of deviation of the opening/closing timing of the intake valve and/or the exhaust valve relative to the base state value.

A deviation in opening/closing timing causes a variation in the calculation of the upper limit value of the intake air charge amount. Accordingly, by correcting the upper limit value of the intake air charge amount based on the amount of deviation, it is possible to estimate the upper limit value of the intake air charge amount with higher accuracy.

In the case where the engine includes an EGR valve that changes an amount of exhaust gas to be recirculated by adjusting an opening degree of the EGR valve, the upper limit value of the intake air charge amount may be corrected based on an amount of deviation of the opening degree of the EGR valve relative to the base state value.

A deviation in the opening degree of the EGR valve causes a variation in the calculation of the upper limit value of the intake air charge amount. Accordingly, by correcting the upper limit value of the intake air charge amount based on the amount of deviation, it is possible to estimate the upper limit value of the intake air charge amount with higher accuracy.

In the case where the engine control unit further performs ignition retard control of performing control in such a way as to cause a delay in ignition timing in order to suppress knocking, the upper limit value of the intake air charge amount may be corrected based on an amount of retard of the ignition timing relative to the base state value.

An amount of retard causes a variation in the calculation of the upper limit value of the intake air charge amount. Accordingly, by correcting the upper limit value of the intake air charge amount based on the amount of retard, it is possible to estimate the upper limit value of the intake air charge amount with higher accuracy.

In the case in which the transmission control unit performs the revolution limit change control, when an acceleration of the vehicle is equal to or less than an acceleration feeling recognition boundary value set in advance, an early forced up-shift control (or a second forced up-shift control) of forcibly shifting up the automatic transmission may be performed at a point in time when an engine revolution speed has reached a predetermined engine revolution speed that is lower than a temporary revolution limit set by the revolution limit change control. As used herein, the "acceleration feeling recognition boundary value" means a boundary value of the degree of the range of acceleration in which the driver can recognize the feeling of acceleration.

When the above-described control is performed, power of the engine itself is limited in the case in which the vehicle is accelerated with the engine operating at a high revolution and a high load. Accordingly, there may be cases in which the driver feels that the engine sound is noisy during acceleration.

In contrast, when such an early forced up-shift control is performed, the engine revolution speed is reduced at an early timing. Correspondingly the engine sound decreases and the engine sound can be suppressed. When the acceleration of the vehicle is higher than the acceleration feeling recognition boundary value, the driver can feel acceleration. However, when the acceleration of the vehicle is lower than the acceleration feeling recognition boundary value, the driver does not feel acceleration any more. In contrast, when the early forced up-shift control is performed, the gear ratio changes and hence it is possible to eliminate feeling of sluggishness. Accordingly, it is possible to ensure the feeling of acceleration.

The early forced up-shift control may be performed only in a case in which the acceleration of the vehicle after up-shifting is predicted to be equal to or more than a deceleration feeling recognition boundary value set in advance.

With such a configuration, the acceleration of the automobile can be maintained in a stable manner within a range in which the driver can obtain the feeling of acceleration. Accordingly, in the range in which the feeling of acceleration after the up-shifting can be ensured, there is no possibility of the driver feeling sluggish acceleration before the up-shifting.

The early forced up-shift control may be performed only in a case in which the engine revolution speed is at a predetermined high revolution in a specific gear stage of the automatic transmission.

That is, the early forced up-shift control is particularly effective and provides good effects in a specific gear stage and a predetermined engine revolution speed at which the driver feels sluggish acceleration due to the execution of the forced up-shift control.

### [Advantageous Effects]

According to the power train control device to which the present invention is applied, it is possible to perform the entire range theoretical air-fuel ratio operation with the three-way catalyst held at an appropriate temperature. Furthermore, it is also possible to suppress a reduction in response to vehicle speed caused by insufficient output from the engine. Therefore, it is possible to achieve advanced emission performance in an engine vehicle without impairing driving performance.

### [Brief Description of Drawings]

FIG. 1 is a diagram showing the main configuration of an automobile to which the present invention is applied.
FIG. 2 is a diagram showing the main configuration of an engine.
FIG. 3 is a block diagram showing the relationship between a power train control device and main related equipment of the power train control device.
FIG. 4 shows an example of a shift map.
FIG. 5A is a diagram for illustrating a problem in an intake air charge amount limit control (conventional technology).
FIG. 5B is a diagram for illustrating a measure for improving the intake air charge amount limit control (present invention).
FIG. 6 is a diagram showing a specific example (table) of revolution limits.
FIG. 7 shows an example of a flowchart related to an entire range theoretical air-fuel ratio operation control.
FIG. 8 shows an example of a flowchart related to the intake air charge amount limit control.
FIG. 9A shows an example of a flowchart related to a forced up-shift control and a revolution limit change control.
FIG. 9B shows a portion of the flowchart shown in FIG. 9A.
FIG. 10 is a diagram of an image showing the relationship between main state values and CE limit value.
FIG. 11 is a diagram of an image showing the relationship between main state values and correction values.
FIG. 12 is a diagram for illustrating a problem to be solved by a modification.
FIG. 13 shows time charts related to an early forced up-shift control.
FIG. 14 is a diagram showing a specific example (table) of revolution limits in the modification.
FIG. 15 is an example of (a portion of) a flowchart for the early forced up-shift control.

### [Embodiment for Carrying Out the Invention]

Hereinafter, an embodiment of the present invention will be described. However, the following description is merely illustrative.

### <Power train>

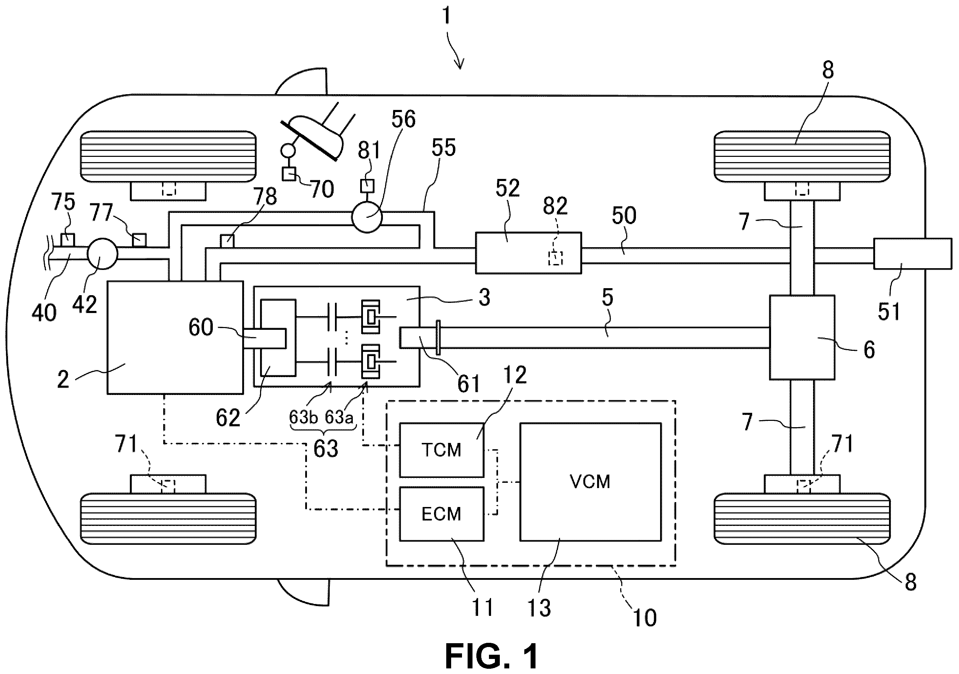

FIG. 1 shows an automobile 1 (an example of a vehicle) to which the present invention is applied. In the automobile 1, an engine 2 is mounted as a drive source (a so-called engine vehicle). The engine 2 may be disposed at the front part (engine room or engine compartment) of the automobile 1. The automobile 1 travels by driving the engine 2.

### (Engine)

The engine 2 may be a reciprocating engine that operates by burning of gasoline through e.g., four strokes consisting of intake, compression, expansion, and exhaust. That is, fuel for this engine 2 is gasoline. However, the fuel can be any fuel that is mainly composed of gasoline and may partially contain components that are not gasoline.

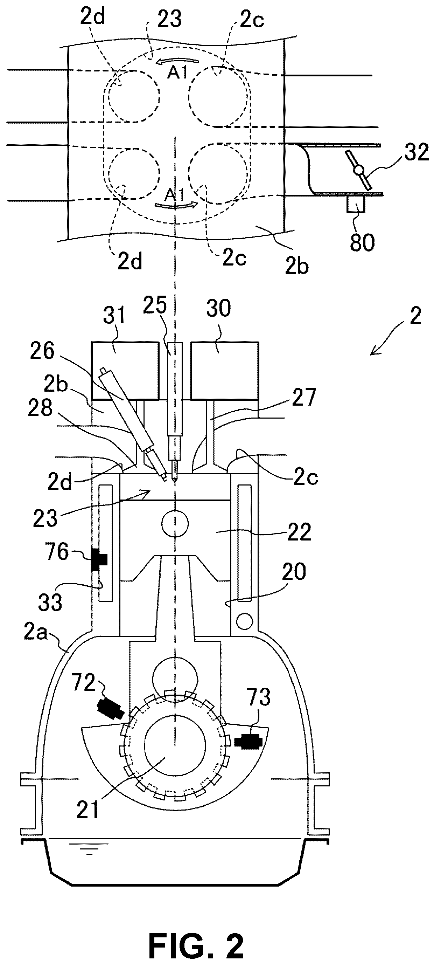

The engine 2 may include one or more cylinders, particularly four cylinders 20 disposed in series. FIG. 2 shows the structure of the engine 2. FIG. 2 shows one cylinder 20. For example, a piston 22 coupled to a crankshaft 21 is inserted into each cylinder 20 formed in an engine block 2a. A combustion chamber 23 is defined by the piston 22 at the upper part of the cylinder 20.

Particularly, a cylinder head 2b is provided with, for each cylinder 20, an injection valve 25, a spark plug 26, a pair of intake valves 27, 27, a pair of exhaust valves 28, 28, an intake continuous (or sequential) variable valve timing mechanism (intake S-VT) 30, an exhaust continuous (or sequential) variable valve timing mechanism (exhaust S-VT) 31, a swirl control valve (SCV) 32, and the like.

The injection valve 25 may be attached to the cylinder head 2b such that the injection port of the injection valve 25 faces the combustion chamber 23. Gasoline is pressure-fed to the injection valve 25 by a fuel supply system not shown in the drawing. The injection valve 25 injects gasoline into the combustion chamber 23.

The spark plug 26 may be attached to the cylinder head 2b such that the electrode of the spark plug 26 faces the combustion chamber 23. The spark plug 26 ignites an air-fuel mixture formed in the combustion chamber 23.

As shown in the upper diagram (a diagram from above) in FIG. 2, the cylinder head 2b has one or more intake ports, particularly a pair of intake ports 2c, 2c. Each of these intake ports 2c, 2c is provided with an intake valve 27 that opens and closes the passage of the intake port 2c. Each intake valve 27 is opened and/or closed at a predetermined timing by driving the intake S-VT 30.

The cylinder head 2b also has one or more exhaust ports, particularly a pair of exhaust ports 2d, 2d. Each of these exhaust ports 2d, 2d is provided with an exhaust valve 28 that opens and closes the passage of the exhaust port 2d. Each exhaust valve 28 is opened and closed at a predetermined timing by driving the exhaust S-VT 31.

The swirl control valve (SCV 32) is disposed upstream of one of the intake ports 2c, 2c. By adjusting the opening degree of the SCV 32, the strength of a flow (swirl flow) that cycles in the combustion chamber 23 is changed.

That is, when the opening degree of the SCV 32 is large, there is almost no difference between the flow rates of intake air that flows into the combustion chambers 23 from the respective intake ports 2c. Accordingly, almost no swirl flow is generated. In contrast, when the opening degree of the SCV 32 is small, a difference occurs between the flow rates of intake air that flows into the combustion chambers 23 from two intake ports 2c, 2c. Therefore, a swirl flow is generated as shown by arrows A1 in FIG. 2. A smaller opening degree of the SCV 32 causes a stronger swirl flow.

The engine 2 (the cylinder head 2b and the engine block 2a) may have a cooling water passage 33 through which cooling water circulates. Cooling water at a low temperature flows into the cooling water passage 33. The cooling water is heated due to heat exchange with the engine 2, thus being increased in temperature to a high temperature and thereafter flows out from the cooling water passage 33. The cooling water circulates through the engine 2, thereby cooling the engine 2.

As shown in FIG. 1, an intake passage 40 may be connected to the engine 2. The intake passage 40 communicates with the intake ports 2c of the respective cylinders 20 via an intake manifold. A throttle valve 42 may be provided on the intake passage 40. By adjusting the opening degree of the throttle valve 42, the amount of air (the amount of fresh air) to be supplied to the combustion chambers 23 is changed.

An exhaust passage 50 may be connected to the engine 2. The upstream side of the exhaust passage 50 communicates with the exhaust ports 2d of the respective cylinders 20. The downstream side of the exhaust passage 50 may communicate with a muffler 51 provided at the rear part of the automobile 1. Exhaust gas generated in the respective combustion chambers 23 may be exhausted to an area behind the automobile 1 through the exhaust passage 50.

An exhaust gas purification apparatus 52 is provided on the exhaust passage 50. The exhaust gas purification apparatus 52 includes a three-way catalyst. That is, the exhaust gas purification apparatus 52 purifies exhaust gas using the three-way catalyst.

An EGR passage 55 that causes recirculation of exhaust gas may be connected between the intake passage 40 and the exhaust passage 50. The EGR passage 55 causes a portion of exhaust gas to reflux to the intake passage 40. An EGR valve 56 is provided to the EGR passage 55. By adjusting the opening degree of the EGR valve 56, the amount of exhaust gas to be recirculated is changed. Therefore, an EGR rate is changed.

### (Automatic transmission)

The automobile 1 also includes an automatic transmission, particularly a multi-stage (or multi-speed) automatic transmission 3 (a so-called AT). The automatic transmission 3 automatically changes an output from the engine 2 (or changes a speed output from the engine 2).

For example, an input shaft 60 of the automatic transmission 3 is coupled to the crankshaft 21 of the engine 2. An output shaft 61 of the automatic transmission 3 is coupled to a differential gear 6 via a propeller shaft 5. A torque converter 62 and/or a transmission mechanism 63 may be assembled between the input shaft 60 and the output shaft 61.

The transmission mechanism 63 may be constituted of a plurality of planetary gear mechanisms 63a, a plurality of clutches 63b (including a brake), and the like. By shifting the transmission mechanism 63, forward movement or backward movement can be shifted, or a gear ratio between the input shaft 60 and the output shaft 61 of the automatic transmission 3 can be changed to a different gear ratio, that is, a gear stage can be shifted.

For example, the input side of each clutch 63b is configured to be coupled to the input shaft 60 via the torque converter 62. The output side of each clutch 63b is coupled to the output shaft 61 via the corresponding planetary gear mechanism 63a.

When a particular clutch 63b is selected and this clutch 63b becomes engaged, the input shaft 60 and the output shaft 61 are coupled to each other via this clutch 63b and the planetary gear mechanism 63a that corresponds to this clutch 63b. As a result, the gear stage is shifted.

In the case of this automatic transmission 3, gear stages from a first gear stage to a sixth gear stage may be provided as will be described later. Output from the engine 2 is changed by the automatic transmission 3 and then transmitted to the differential gear 6 via the propeller shaft 5.

For example, the differential gear 6 is coupled to left and right driving wheels 8 via a pair of axles 7, 7. The output from the engine 2 is distributed to the respective axles 7 by the differential gear 6, and is transmitted to the respective driving wheels 8. As a result, the automobile 1 travels.

### <Power train control device>

A device (power train control device 10) that controls the above-described power train is also mounted in the automobile 1. The power train control device 10 is constituted of an engine control module (ECM) 11 and a transmission control module (TCM) 12, and optionally a vehicle control module (VCM) 13, and the like.

The ECM 11 corresponds to an "engine control unit". The TCM 12 corresponds to a "transmission control unit". The VCM 13 is a host module for the ECM 11 and the TCM 12. The VCM 13 comprehensively controls the ECM 11 and the TCM 12.

For example, each of the ECM 11, the TCM 12, and the VCM 13 is constituted of pieces of hardware such as a processor, a memory, and an interface, and software such as a database and a control program. These modules are connected to each other by a CAN (Controller Area Network), for example, and are configured to be capable of performing electrical communication with each other.

The configuration of the power train control device 10 may be modified according to specifications. For example, the power train control device 10 may be constituted of one module, or may be constituted of a larger number of modules.

### <Various sensors>

As shown in FIG. 1 and FIG. 2, one or various sensors are attached to the power train. For example, an accelerator opening degree sensor 70, a vehicle speed sensor 71, an engine revolution speed sensor 72, a crank angle sensor 73, an airflow sensor 75, a cooling water temperature sensor 76, an intake air temperature sensor 77, an exhaust gas temperature sensor 78, an SCV opening degree sensor 80, an EGR valve opening degree sensor 81, and a catalyst temperature sensor 82 are attached to the power train.

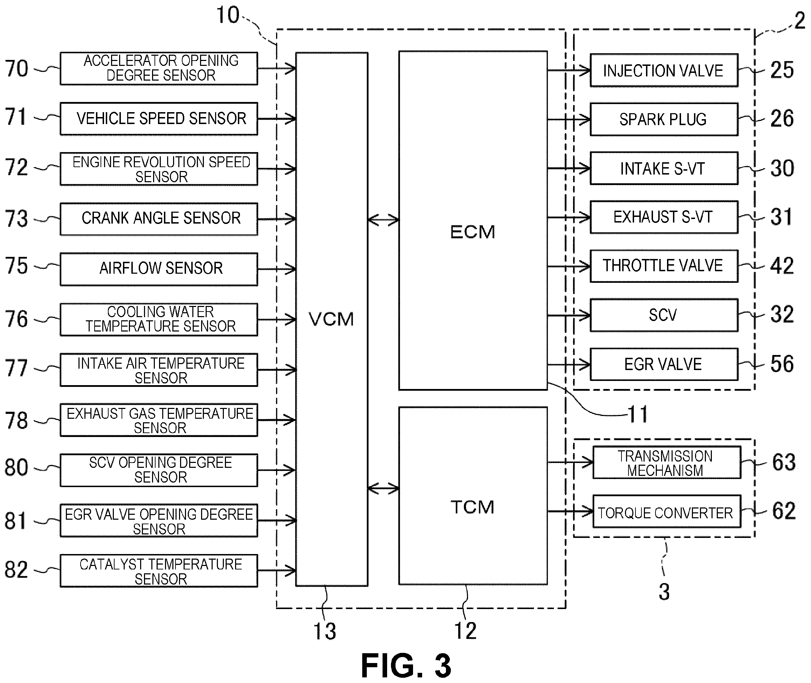

The power train control device 10 controls the engine 2 and the automatic transmission 3 e.g., in cooperation with these sensors. FIG. 3 is a block diagram showing the relationship between these various sensors, the power train control device 10, the engine 2, and the automatic transmission 3.

Particularly, the accelerator opening degree sensor 70 is attached to an accelerator pedal. The accelerator opening degree sensor 70 detects an accelerator opening degree that corresponds to manipulation of the accelerator pedal. The vehicle speed sensor 71 is attached to the hub or the like of the wheel. The vehicle speed sensor 71 detects the speed of the automobile 1.

Further particularly, the engine revolution speed sensor 72 is attached to the engine 2. The engine revolution speed sensor 72 detects the revolution speed of the engine 2. The crank angle sensor 73 is also attached to the engine 2. The crank angle sensor 73 detects the rotation angle of the crankshaft 21. The airflow sensor 75 is attached to the intake passage 40. The airflow sensor 75 detects the flow rate of fresh air that flows through the intake passage 40.

Further particularly, the cooling water temperature sensor 76 is attached to the engine 2. The cooling water temperature sensor 76 detects the temperature of cooling water. The intake air temperature sensor 77 is attached to the intake passage 40. The intake air temperature sensor 77 detects the temperature of fresh air. The exhaust gas temperature sensor 78 is attached to the exhaust passage 50. The exhaust gas temperature sensor 78 detects the temperature of exhaust gas exhausted from the combustion chambers 23.

Further particularly, the SCV opening degree sensor 80 is attached to the SCV 32. The SCV opening degree sensor 80 detects the opening degree of the SCV 32. The EGR valve opening degree sensor 81 is attached to the EGR valve 56. The EGR valve opening degree sensor 81 detects the opening degree of the EGR valve 56. The catalyst temperature sensor 82 is attached to the exhaust gas purification apparatus 52. The catalyst temperature sensor 82 detects the temperature of the three-way catalyst.

These sensors may output detection signals to the VCM 13. The VCM 13 suitably processes the inputted detection signals and thereafter output the detection signals to the ECM 11 and the TCM 12 when necessary. As described above, the VCM 13 is configured to be capable of performing electrical communication with the ECM 11 and the TCM 12. The ECM 11 and the TCM 12 can perform electrical communication with each other via the VCM 13.

The ECM 11 is a module that mainly controls the action of the engine 2. That is, the ECM 11 may be electrically connected to the injection valve 25, the spark plug 26, the intake S-VT 30, the exhaust S-VT 31, the throttle valve 42, the SCV 32, and the EGR valve 56. The ECM 11 outputs control signals to these components to control the actions of these components.

The TCM 12 is a unit that mainly controls the action of the automatic transmission 3. That is, the TCM 12 may be electrically connected to the transmission mechanism 63 and the torque converter 62. The TCM 12 outputs control signals to these components to control the actions of these components.

Based on the detection signals inputted from the one or various sensors, the VCM 13, the ECM 11, and the TCM 12 constituting the power train control device 10 control the engine 2 and the automatic transmission 3 in cooperation with each other. As a result, the automobile 1 travels.

### <Control of engine>

The ECM 11 may control the engine 2 in such a way that power that corresponds to the driver's request will be output. In the case of this automobile 1, to achieve advanced emission performance in particular, the ECM 11 performs entire range theoretical air-fuel ratio operation control of controlling the operation of the engine 2 such that a theoretical air-fuel ratio is achieved over the entire operation range.

As described above, the exhaust gas purification apparatus 52 purifies exhaust gas using the three-way catalyst. To obtain a high purification rate of the three-way catalyst, it is necessary to stabilize an air-fuel ratio at a theoretical air-fuel ratio (14.7) or within a narrow range around the theoretical air-fuel ratio (so-called window). For this reason, to achieve advanced emission performance, it is necessary to operate the engine 2 within this window over the entire operation range of the engine 2.

Accordingly, the ECM 11 performs control such that, even when the engine revolution speed and the load are changed to high values or low values, the air-fuel ratio (A/F) remains at the theoretical air-fuel ratio (λ = 1), that is, remains within the range of the window (the target air-fuel ratio being uniformly λ1). Therefore, it is possible to always hold the exhaust gas purification apparatus 52 in an optimal state for purification. Advanced emission performance can be achieved.

In contrast, when the theoretical air-fuel ratio is achieved in an operation range with a large amount of heat in exhaust gas, for example, in a range with a high engine revolution speed and a high load, the amount of exhaust heat is further increased due to efficient combustion. As a result, the amount of heat in exhaust gas may be excessively increased, causing the temperature of the three-way catalyst to exceed an allowable temperature. When the temperature of the three-way catalyst exceeds the allowable temperature, the three-way catalyst is thermally deteriorated and hence durability of the three-way catalyst decreases.

In view of the above, in the case of this automobile 1, to prevent the three-way catalyst from exceeding the allowable temperature, an upper limit value is set for an intake air charge amount. Further, when the intake air charge amount reaches this upper limit value, the ECM 11 performs intake air charge amount limit control of limiting an intake air charge amount in such a way as to prevent the intake air charge amount from exceeding the upper limit value.

That is, the ECM 11 cuts the intake air charge amount (the mass of fresh air to be charged into the combustion chamber 23 during combustion) by an amount corresponding to the excess from the upper limit value. The entire range theoretical air-fuel ratio operation control is performed and hence the mass of fuel injected into the combustion chamber 23 is also reduced correspondingly. Combustion heat is reduced and hence the temperature of exhaust gas is also decreased. Accordingly, it is possible to prevent the three-way catalyst from exceeding the allowable temperature.

Actual limitation on the intake air charge amount may be performed using charging efficiency (CE), which is a general indicator for the intake air charge amount. That is, a CE limit value may be set in such a way as to correspond to the upper limit value of the intake air charge amount. For example, the ECM 11 performs the intake air charge amount limit control based on a limit value for CE (CE limit value). In the intake air charge amount limit control, the CE limit value is adjusted in such a way as to prevent the temperature of the three-way catalyst from exceeding the allowable temperature.

That is, a higher engine revolution speed and a higher load cause a higher temperature of exhaust gas, leading to a strict value (small value) for the CE limit value. Particularly, engine revolution speed affects a rise in the temperature of exhaust gas more greatly than load does. Accordingly, a smaller CE limit value may be set for a higher engine revolution speed.

CE is affected by dynamic factors, such as the pressure and the temperature of air to be charged, and by static factors, such as piping resistance of the intake passage 40. CE may be an estimation value calculated based on a number of such factors. Estimation accuracy of CE varies depending on the calculation method. Accordingly, in this automobile 1, a method for calculating a CE limit value is devised such that appropriate estimation accuracy corresponding to a risk can be obtained (the details will be described later).

The ECM 11 may also perform ignition retard control in order to suppress knocking. That is, during normal combustion, the ECM 11 may control the spark plug 26 such that ignition is achieved at an optimal timing in the vicinity of a top dead center. In contrast, when knocking starts to occur, the ECM 11 may perform control in such a way as to cause a delay (or retard) in ignition timing (ignition retard control). Due to the delay (or retard) of the ignition timing, knocking can be suppressed.

### <Control of automatic transmission>

The TCM 12 may control the automatic transmission 3 to change output (or a sheed) from the engine 2 according to a traveling state of the automobile 1. A predetermined shift map 90 is included in the TCM 12 in advance. Based on this shift map 90, the TCM 12 performs automatic shift control of automatically controlling the action of the automatic transmission 3.

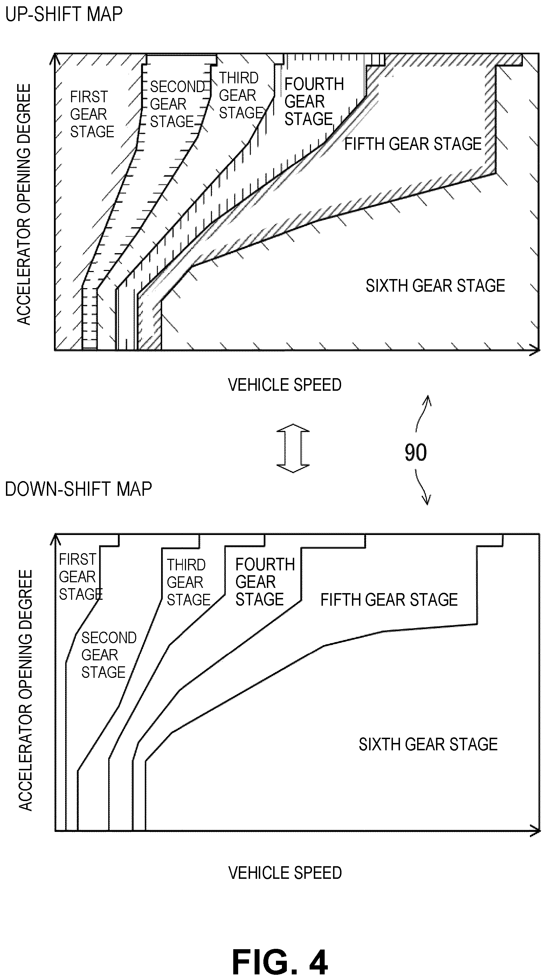

FIG. 4 shows the shift maps 90 as an example. As described above, the automatic transmission 3 has gear stages (or speeds) from a first gear stage (or a first speed) to a sixth gear stage (or a sixth speed). A shift map 90 corresponding to up-shifting and a shift map 90 corresponding to down-shifting are set based on accelerator opening degree and vehicle speed.

The upper diagram is the shift map 90 for up-shifting. The lower diagram is the shift map 90 for down-shifting. When the gear stage exceeds a boundary between two neighboring gear stages, the gear stage is shifted.

For example, in the shift map 90 for up-shifting, when the gear stage exceeds the boundary between the fifth gear stage and the sixth gear stage from the fifth gear stage to the sixth gear stage, the TCM 12 performs control of shifting up the gear stage from the fifth gear stage to the sixth gear stage. In the shift map 90 for down-shifting, when the gear stage exceeds the boundary between the fourth gear stage to the third gear stage from the fourth gear stage to the third gear stage, the TCM 12 performs control of shifting down the gear stage from the fourth gear stage to the third gear stage.

The TCM 12 also performs forced up-shift control of forcibly shifting up the automatic transmission 3 based on a revolution limit so as to prevent excessive revolution of the engine 2. The revolution limit is the upper limit value of engine revolution speed set in advance in the TCM 12 to prevent the revolution of the engine 2 from exceeding the allowable limit.

When the engine revolution speed reaches the revolution limit, the TCM 12 forcibly shifts up the automatic transmission 3 in addition to the above-described gear-shifting performed based on the shift map 90. When the automatic transmission 3 is shifted up, the gear ratio is reduced, so that the engine revolution speed is reduced. Accordingly, it is possible to prevent the engine revolution speed from exceeding the revolution limit.

### <Problem of intake air charge amount limit control and measures against the problem>

When the intake air charge amount is limited, the intake air charge amount becomes lower than an original required amount. Therefore, output from the engine 2 may become insufficient. As a result, situations may occur in which a vehicle speed does not increase even when the driver depresses the accelerator.

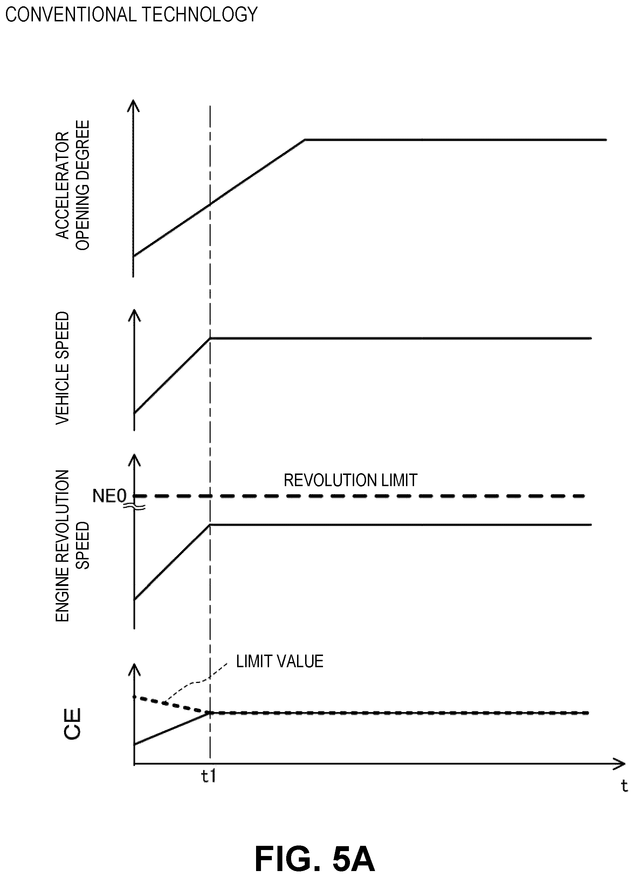

FIG. 5A shows, as an example, changes of main elements with time when the intake air charge amount is limited in the conventional technology. A sufficiently large value is set for a normal revolution limit (NE0) according to performance of the engine 2. When the accelerator is depressed and the engine revolution speed is increased, CE may increase correspondingly.

However, the amount of heat in exhaust gas is also increased. Accordingly, e.g., in the case in which the engine is operated in a range with a high load and high revolution, the temperature of the three-way catalyst rises and approaches the allowable temperature. Therefore, the CE limit value gradually moves toward a strict value (small value).

As a result, when CE reaches the CE limit value (timing at t1), CE (intake air charge amount) is limited (CE plateaus at the CE limit value) by the intake air charge amount limit control. Therefore, output from the engine 2 does not increase any more and hence the engine revolution speed plateaus as well. The vehicle speed is also not increased.

Even when the accelerator is further depressed, the engine revolution speed and the vehicle speed are not increased. The vehicle speed is not changed and hence there is no possibility of the automatic transmission 3 being shifted up. The automobile 1 cannot travel according to the manipulation performed by the driver and hence the driving performance of the automobile 1 decreases.

In view of the above, this power train control device 10 is devised such that by using a revolution limit, the vehicle speed can be increased even when output from the engine 2 is limited, and thus traveling can be achieved according to manipulation performed by the driver. For example, when the ECM 11 limits CE, the TCM 12 performs revolution limit change control of lowering revolution limit.

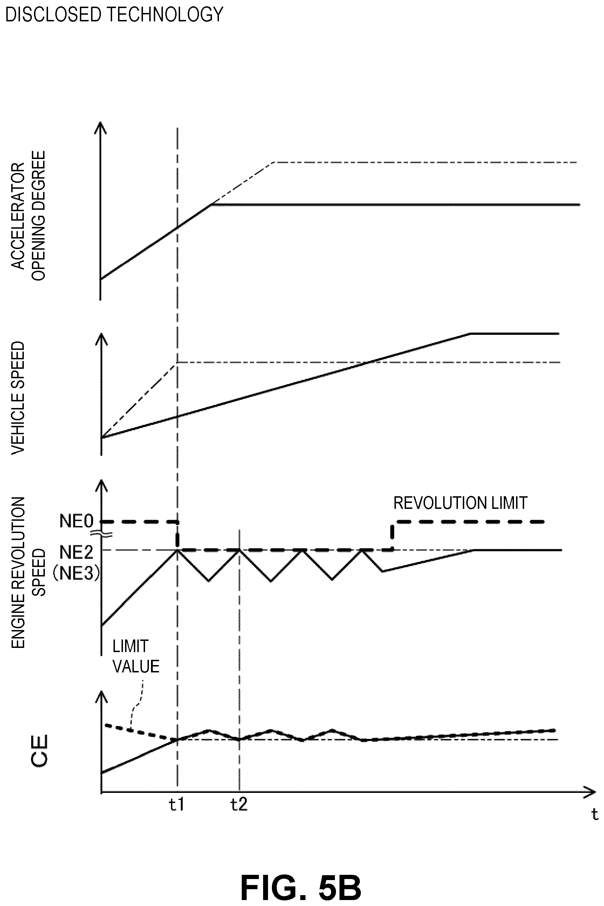

FIG. 5B shows, as an example, changes of main elements with time when the intake air charge amount is limited by this power train control device 10. In the same manner as the conventional limitation, when the accelerator is depressed an engine revolution speed is increased, CE may also increase correspondingly. For example, in the case in which the engine is operated in a range with a high load and high revolution, the CE limit value gradually moves toward a strict value (small value).

As a result, when CE reaches the CE limit value (timing at t1), CE is limited by the intake air charge amount limit control. At this point, in this power train control device 10, the TCM 12 performs the revolution limit change control of lowering a revolution limit by a predetermined amount of decrease.

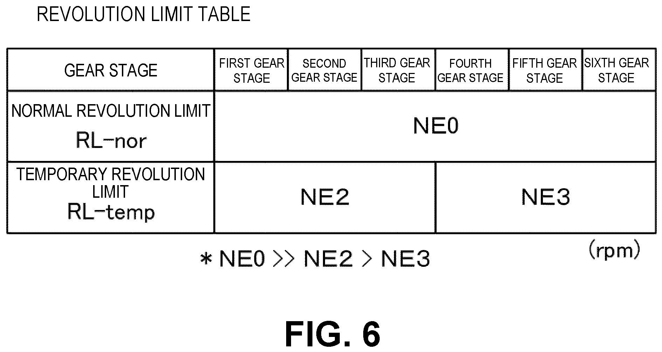

Temporary revolution limits are also set in the ECM 11 in addition to the normal revolution limit. FIG. 6 shows a table of revolution limits as an example. It is not particularly necessary to differentiate the original revolution limit for high gear stages (e.g., at least one of the fourth to sixth gear states) and low gear stages (e.g., at least one of the first to third gear states), the original revolution limit corresponding to the allowable limit for the engine revolution speed. Accordingly, in this power train control device 10, as a normal revolution limit (RL-nor), a common first revolution speed (NE0) may be set for gear stages from the first gear stage to the sixth gear stage.

In contrast, regarding revolution limits used in the revolution limit change control (temporary revolution limits: RL-temps), different revolution limits may be set for the high gear stages and the low gear stages. For example, an amount of decrease in temporary revolution limit for the high gear stages from the normal revolution limit is greater than an amount of decrease in temporary revolution limit for the low gear stages from the normal revolution limit. In other words, an amount of decrease in temporary revolution limit increases as the gear stage becomes higher.

In the case of the temporary revolution limits described as an example, a common second revolution speed (NE2) may be set for the low-speed stages from the first gear stage to the third gear stage, and a common third revolution speed (NE3) may be set for the high-speed stages from the fourth gear stage to the sixth gear stage. The second revolution speed is higher than the third revolution speed, and the first revolution speed is sufficiently higher than the second revolution speed (NE0 >> NE2 > NE3). Accordingly, the temporary revolution limit degreases as the gear stage becomes higher.

As shown in a modification described later, it is not essential to set the revolution speed for the temporary revolution limits as two revolution speeds: a revolution speed for low-speed stages and a revolution speed for high-speed stages. A different revolution speed may be set for each gear stage, or revolution speeds may be set for arbitrarily defined stages, such as a low-speed stage, a middle-speed stage, and a high-speed stage.

By setting higher temporary revolution limits for the low-speed stages than for the high-speed stages, the upper limits of engine revolution speed for the low-speed stages become relatively high. Therefore, in the low-speed stages, it is possible to increase the vehicle speed to a high speed more quickly.

As shown in FIG. 5B, the TCM 12 may perform the revolution limit change control to switch the normal revolution limit to the temporary revolution limit. Assuming that the automatic transmission 3 is in the second gear stage at this point, the second revolution speed (NE2) is set as the temporary revolution limit by performing the revolution limit change control.

The second revolution speed (NE2) is a revolution speed that may be achieved in the second gear stage when CE is limited. The second revolution speed (NE2) is also a revolution speed that may be achieved in the first gear stage or the third gear stage when CE is limited. Likewise, the third revolution speed (NE3) is a revolution speed that may be achieved in any of the fourth gear stage to the sixth gear stage when CE is limited.

When the engine revolution speed reaches the second revolution speed (NE2), the TCM 12 performs the forced up-shift control to forcibly shift up the automatic transmission 3. The automatic transmission 3 is shifted from the second gear stage to the third gear stage. Therefore, the gear ratio of the automatic transmission 3 is reduced and hence the engine revolution speed is reduced. The vehicle speed is maintained.

Due to a reduction in engine revolution speed, limitation on CE is eased. That is, the CE limit value is increased. Therefore, the engine 2 can obtain power and hence the engine revolution speed and the vehicle speed are increased.

When the engine revolution speed reaches the second revolution speed (NE2) (timing at t2), the TCM 12 performs the forced up-shift control again to forcibly shift up the automatic transmission 3. The automatic transmission 3 is shifted from the third gear stage to the fourth gear stage.

Therefore, the engine revolution speed is reduced and the CE limit value is increased. The engine 2 can obtain power again and hence the engine revolution speed and the vehicle speed are increased. Such a state change is repeated until the gear stage reaches the sixth gear stage, which is the highest gear stage. Therefore, it is possible to obtain power from the engine 2 according to the manipulation of the accelerator each time up-shifting is performed and hence the vehicle speed can be continuously increased.

Accordingly, it is possible to achieve traveling according to the manipulation performed by the driver. It is possible to suppress the lowering of the driving performance of the automobile 1. The power itself of the engine 2 is limited also in this measure. Accordingly, it is undeniable that an increase in vehicle speed is relatively gentle.

### <Specific example of control of power train control device>

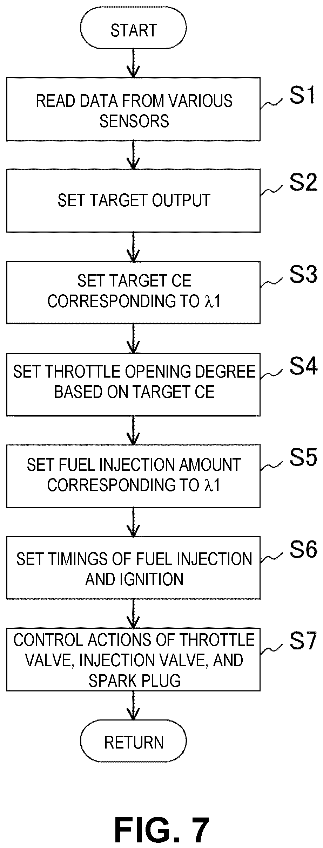

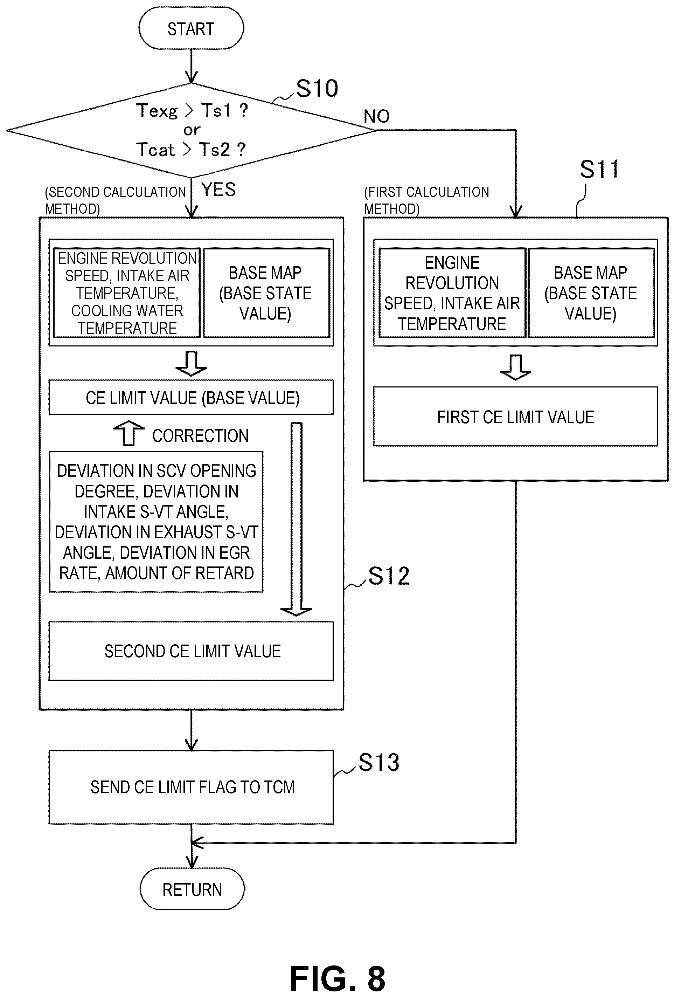

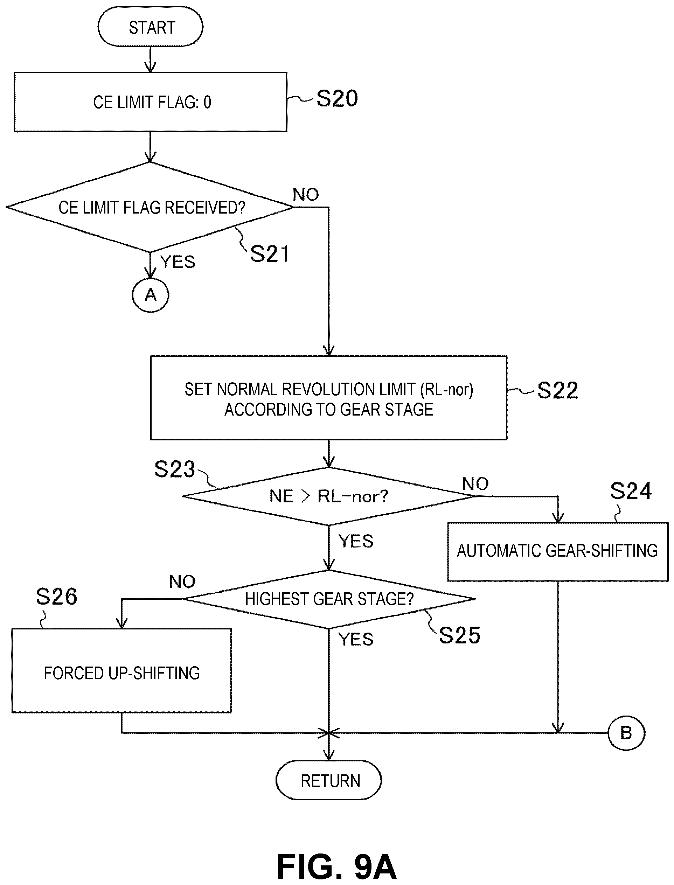

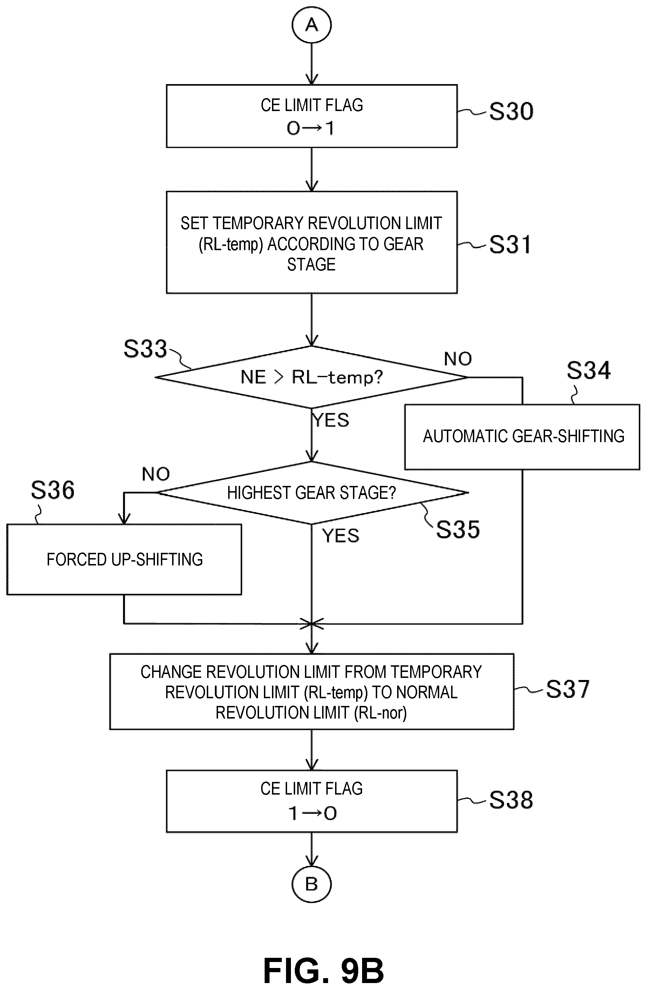

FIG. 7 shows a flowchart related to the entire range theoretical air-fuel ratio operation control as an example. FIG. 8 shows a flowchart related to the intake air charge amount limit control as an example. FIG. 9A and FIG. 9B show a flowchart related to the forced up-shift control and the revolution limit change control as an example.

As shown in FIG. 7, during the operation of the engine 2, the VCM 13 may always read detection signals that are output from various sensors (step S1). Based on these detection signals, the ECM 11 may set, in cooperation with the VCM 13, a target torque (target output) to be output in the control of the engine 2 (step S2). Based on the target output, the ECM 11 sets CE to be a target (target CE) corresponding to the theoretical air-fuel ratio (λ1) (step S3).

The ECM 11 may set a throttle opening degree based on the target CE (step S4). The ECM 11 sets a fuel injection amount corresponding to the theoretical air-fuel ratio (λ1) (step S5). The ECM 11 may set timings of fuel injection and ignition for each cylinder 20 according to the operation state of the engine 2 (step S6).

The ECM 11 may control the actions of the throttle valve 42, the injection valve 25, and the spark plug 26 based on the set throttle opening degree and the set fuel injection amount, and based on the set fuel injection timing and the set ignition timing (step S7). Therefore, combustion is intermittently and repeatedly performed in the combustion chamber 23 of each cylinder 20.

Due to such a control performed by the power train control device 10, the engine 2 operates at the theoretical air-fuel ratio over the entire operation range of the engine 2. Accordingly, it is possible to purify exhaust gas always in an optimal state. Advanced emission performance can be achieved.

The ECM 11 may also control the actions of the intake S-VT 30, the exhaust S-VT 31, the SCV 32, and the EGR valve 56 according to the operation state of the engine 2 in such a way that these actions are in coordination with the action of the throttle valve 42 and the like.

In contrast, when the power train control device 10 performs such an entire range theoretical air-fuel ratio operation control, as described above, the amount of exhaust heat from the engine 2 may excessively increases e.g., in the operation range with high revolution and high load. Thus, the ECM 11 may set a CE limit value corresponding to risk so as to prevent the temperature of the three-way catalyst from exceeding the allowable temperature.

For example, as shown in FIG. 8, the ECM 11 obtains, in cooperation with the VCM 13, a temperature T exg of exhaust gas that flows out from the engine 2. Then, the ECM 11 may determine whether the temperature of the exhaust gas is higher than a predetermined first threshold Ts1. The ECM 11 may also obtain a temperature T cat of a three-way catalyst in cooperation with the VCM 13. The ECM 11 may then determine whether this temperature of the three-way catalyst is higher than a predetermined second threshold Ts2 (step S10). The first threshold and the second threshold may be set in advance in the ECM 11.

When it is determined that the temperature of the exhaust gas is equal to or less than the first threshold, and it is determined that the temperature of the three-way catalyst is equal to or less than the second threshold, the ECM 11 may determines that there is a low possibility of the temperature of the three-way catalyst exceeding the allowable temperature (low risk state). Therefore, the ECM 11 may calculate a CE limit value (first CE limit value) by a normal simple calculation method (first calculation method) (step S11).

In contrast, when it is determined that the temperature of the exhaust gas is higher than the first threshold, or when it is determined that the temperature of the three-way catalyst is higher than the second threshold, the ECM 11 may determine that the temperature of the exhaust gas or the temperature of the three-way catalyst is close to the limit, so that there is a high possibility of the temperature of the three-way catalyst exceeding the allowable temperature (high risk state). Therefore, the ECM 11 may switche the calculation method to calculate a CE limit value (second CE limit value) by a temporary advanced calculation method (second calculation method) (step S12).

The first calculation method and the second calculation method differ from each other in accuracy in the estimation of the CE limit value. The second calculation method may have higher estimation accuracy than the first calculation method. The second CE limit value has higher reliability as the CE limit value than the first CE limit value.

For example, in the case of the low risk state, CE is usually deviates from the CE limit value. That is, there is almost no possibility of CE reaching the CE limit value. Accordingly, there is no problem even when estimation accuracy is not high.

In contrast, e.g., in the case of the high risk state, CE usually reaches the CE limit value and is limited (the intake air charge amount is limited). Output from the engine 2 is reduced, thus affecting the driving performance of the automobile 1. Accordingly, to suppress a reduction in output from the engine 2, it is preferable that the CE limit value have high reliability.

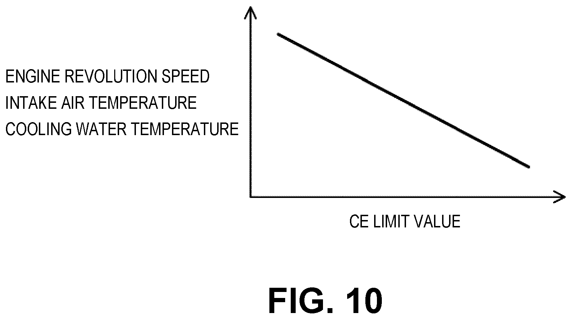

Of various state values that are actually measured, the CE limit value has a high correlation with engine revolution speed, intake air temperature, and temperature of cooling water in the engine 2. FIG. 10 shows the relationship between these state values and the CE limit value as an example.

A higher engine revolution speed causes a larger amount of exhaust heat from the engine 2 per unit time, thus increasing the temperature of the three-way catalyst. Accordingly, a smaller CE limit value (a smaller upper limit value of the intake air charge amount), that is, stricter limitation on CE, may be set for a higher engine revolution speed.

The same also applies to intake air temperature and temperature of cooling water in the engine 2. A smaller CE limit value may be set for a higher intake air temperature. A smaller CE limit value may be set for a higher temperature of cooling water in the engine 2.

As described above, it is preferable that a smaller CE limit value be set for a higher value of at least any one of the revolution speed of the engine 2, intake air temperature, and the temperature of cooling water in the engine 2. It is possible to achieve both suppression of thermal deterioration of the three-way catalyst and suppression of a reduction in output from the engine 2 in a well-balanced manner.

Particularly, the temperature of the three-way catalyst depends more greatly on engine revolution speed and intake air temperature than on temperature of cooling water in the engine **2.** Accordingly, in the first calculation method, of these state values, the first CE limit value may be calculated based on two values consisting of engine revolution speed and intake air temperature and based on one or more predetermined base state values.

The ECM 11 may include a base map that contains data of reference numerical values for other state values necessary for calculation of the CE (SCV opening degree, S-VT angle of intake air and exhaust gas, and the like for example). The base state value may be obtained from this base map. With the first calculation method in which calculation is performed based on two main state values, it is possible to efficiently calculate the first CE limit value having required and sufficient reliability with a simple arithmetic operation.

In contrast, in the second calculation method, the CE limit value (base value) may be calculated in a similar manner to the first calculation method, based on three values consisting of engine revolution speed, intake air temperature, and temperature of cooling water in the engine 2 and based on the predetermined base state value obtained from the base map. With the second calculation method, the CE limit value (base value) is calculated based on all of three state values having a high correlation and hence it is possible to obtain higher estimation accuracy.

In the second calculation method, to further increase estimation accuracy, the CE limit value (base value) may further be corrected according to state values that are actually measured. Therefore, the second CE limit value having higher reliability is calculated.

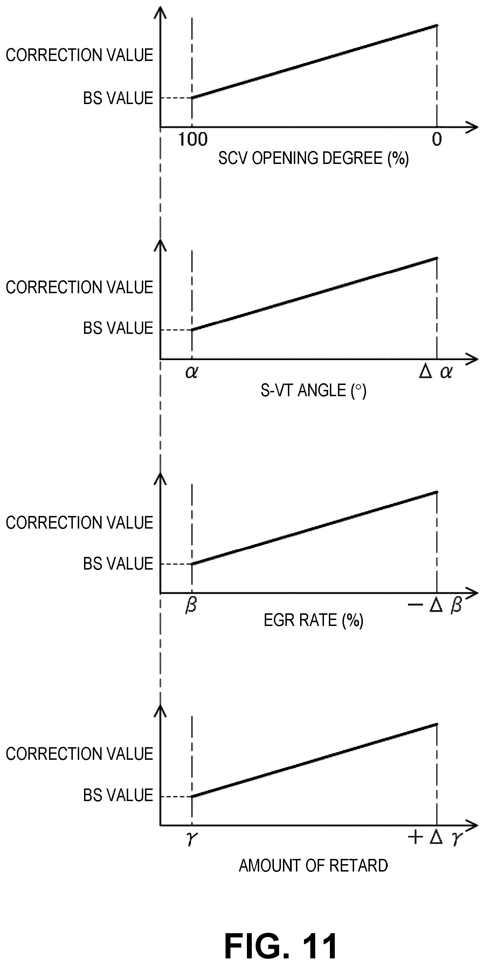

In the case of this automobile 1, state values that affect the estimation accuracy include SCV opening degree, intake S-VT angle, exhaust S-VT angle, EGR rate, and amount of retard. FIG. 11 shows the relationship between these state values and correction values as an example.

In the case of SCV opening degree, for example, full open (the opening degree being 100%) may be set as the base state value (BS value) for SCV opening degree. A larger amount of deviation of the opening degree of the SCV 32 relative to the base state value, that is, a smaller SCV opening degree, causes a larger deviation of intake air introduced into the combustion chambers 23 from the pairs of intake ports 2c, 2c. Such a deviation increases variation in the amount of fresh air in the combustion chambers 23, thus lowering accuracy in calculation of CE. Accordingly, a deviation from the CE limit value (base value) becomes larger.

In view of the above, a larger correction value for SCV opening degree may be set for a smaller SCV opening degree. Based on this correction value, the CE limit value (base value) may be corrected to a stricter value, that is, to a smaller value. Reliability of the CE limit value is increased.

In the case of respective S-VT angles of exhaust gas and intake air, a predetermined angle α may be set as the base state value (BS value) for S-VT angles. A larger amount of deviation of opening/closing timing relative to the base state value, that is, a larger amount of deviation Δα from this angle causes a larger amount of fresh air in the combustion chambers 23. Such variation lowers the accuracy of calculation of CE, thus increasing a deviation from the CE limit value (base value).

In view of the above, a larger correction value for S-VT angle may be set for a larger deviation Δα in S-VT angle. Based on this correction value, the CE limit value (base value) is corrected to a stricter value, that is, to a smaller value.

A predetermined value β may be set as the base state value (BS value) for EGR rate. When the opening degree of the EGR valve 56 is adjusted and the EGR rate changes to the minus side correspondingly, the amount of fresh air in the combustion chambers 23 relatively increases. Accordingly, CE becomes larger than the base state value.

Thus, a larger correction value for EGR rate is set for a larger deviation Δβ in EGR rate on the minus side, which is related to the amount of deviation of the opening degree of the EGR valve 56. Based on this correction value, the CE limit value (base value) is corrected to a stricter value, that is, to a smaller value.

A predetermined value γ on the retard angle side of MBT may be set as the base state value (BS value) for the amount of retard. Accordingly, when the amount of retard is increased, the temperature of exhaust gas exhausted from the engine 2 increases due to a delay in combustion timing.

Thus, a larger correction value for the amount of retard is set for a larger deviation Δγ in amount of retard. Based on this correction value, the CE limit value (base value) is corrected to a stricter value, that is, to a smaller value.

As described above, with the second calculation method, it is possible to obtain a second CE limit value that takes into account the lowering of accuracy in calculation of CE and a difference between base state value and actual state value. The second calculation method can calculate CE with high estimation accuracy, thus calculating a second CE limit value excellent in reliability. State values that are taken into account in the second calculation method for correction, base state values for the state values, management of correction values, or the like may be suitably changed according to specifications.

As shown in FIG. 8, when the high risk state is determined, the ECM 11 may calculate a second CE limit value, and may send a command to change a CE limit flag (a flag change command) to the TCM 12 (step S13).

As shown in FIG. 9A, **"0"** may be set in the TCM 12 as the initial value for the CE limit flag (step S20). The value of the CE limit flag may be **"0" or** "1". The value **"0"** corresponds to the low risk state, and the value **"1"** corresponds to the high risk state.

The TCM 12 determines whether the flag change command has been received from the ECM 11 (step S21). When the flag change command has not been received (No in step S21), it means the low risk state and hence the TCM 12 sets the normal revolution limit (RL-nor) according to the gear stage by referencing the table of revolution limits (step S22). In the case of this automobile **1, a** uniform value (NE0) may be set regardless of whether the gear stage is high or low.

In the case of the low risk state, the TCM 12 may determine whether the engine revolution speed (NE) is exceeds the normal revolution limit (step S23). As a result, when the engine revolution speed is equal to or less than the normal revolution limit, the TCM 12 may perform automatic gear-shifting (step S24). That is, the TCM 12 shifts the gear stage of the automatic transmission 3 based on the shift map 90, as is performed in the conventional technology.

In contrast, when the engine revolution speed exceeds the normal revolution limit, the TCM 12 may determine whether the automatic transmission 3 is in the highest gear stage (the sixth gear stage in this automobile 1) (step S25). As a result, when the automatic transmission 3 is not in the highest gear stage, the TCM 12 forcibly shifts up the automatic transmission 3 (step S26).

The automatic transmission 3 is forcibly shifted up. Therefore, the engine revolution speed is reduced. Accordingly, it is possible to cause the engine revolution speed to be smaller than the value of the normal revolution limit. It is possible to prevent excessive revolution of the engine 2.

After the TCM 12 forcibly shifts up the automatic transmission 3, the TCM 12 may return. In contrast, when the automatic transmission 3 is in the highest gear stage, the TCM 12 cannot shift up the automatic transmission 3. Accordingly, the TCM 12 may return in this case as well. The power train control device 10 prevents excessive revolution of the engine 2 by means other than forced up-shifting (for example, fuel cut).

When the TCM 12 receives the flag change command from the ECM 11, it means the high risk state (Yes in step S21). Accordingly, in this case, the TCM 12 may change the value of the CE limit flag from "0" to **"1"** (step S30) as shown in FIG. 9B.

Next, the TCM 12 may set a temporary revolution limit (RL-temp) according to the gear stage by referencing the table of revolution limits (step S31). In the case of this automobile 1, the value (NE2) for low-speed stages may be set for the gear stages from the first gear stage to the third gear stage, and the value (NE3) for high-speed stages may be set for the gear stages from the fourth gear stage to the sixth gear stage.

Then, the TCM 12 may determine whether the engine revolution speed (NE) exceeds the temporary revolution limit (step S33). As a result, when the engine revolution speed is equal to or less than the temporary revolution limit, the TCM 12 performs automatic gear-shifting as long as the engine revolution speed does not exceed the temporary revolution limit (step S34).

When the engine revolution speed exceeds the temporary revolution limit, the TCM 12 may determine whether the automatic transmission 3 is in the highest gear stage (step S35). As a result, when the automatic transmission 3 is not in the highest gear stage, the TCM 12 forcibly shifts up the automatic transmission 3 (step S36).

The automatic transmission 3 is forcibly shifted up. Therefore, the engine revolution speed is reduced. Due to a reduction in engine revolution speed, the CE limit value is relaxed, thus being increased. Therefore, power from the engine 2 can be obtained, thus increasing the engine revolution speed and the vehicle speed.

Then, the TCM 12 changes the revolution limit from the temporary revolution limit to the normal revolution limit (step S37). The TCM 12 may return the value of the CE limit flag to the initial value again (step S38). Thereafter, the TCM 12 may return.

Accordingly, this power train control device 10 performs the intake air charge amount limit control and hence it is possible to perform the entire range theoretical air-fuel ratio operation with the three-way catalyst held at a proper temperature. Further, even when the intake air charge limit control is performed, it is possible to ensure power from the engine 2 by combination of the forced up-shift control and the revolution limit change control. It is also possible to suppress the lowering of the driving performance of the vehicle caused by insufficient output from the engine **2.**

Therefore, it is possible to achieve advanced emission performance in an engine vehicle without impairing the driving performance.

### <Modification>

When the above-described control is performed, there may be cases in which the driver feels that the engine sound is noisy during acceleration in the case in which the automobile 1 is accelerated with the engine 2 operating at high revolutions and high load.

That is, when the forced up-shifting is performed in the revolution limit change control, the power itself of the engine 2 is limited as described above, and hence an increase in vehicle speed, that is, acceleration, inevitably becomes gradual. For this reason, there can be cases in which sufficient acceleration cannot be obtained despite a loud engine sound even when the accelerator is fully opened with the engine 2 operating at high revolutions, such as when traveling along a long climbing lane at a high speed.

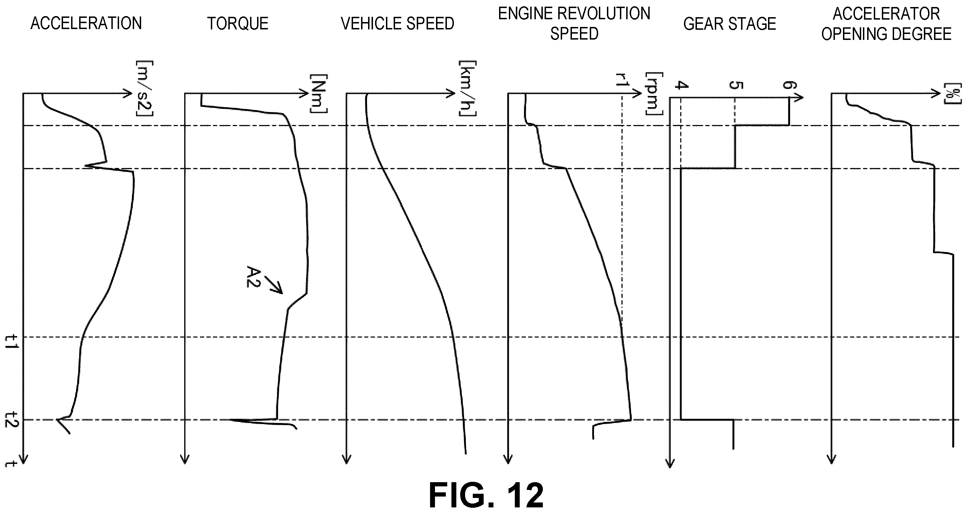

FIG. 12 shows, in a simplified manner, examples of operation data during test traveling of an automobile to which the present invention is applied (hereinafter referred to as "test vehicle"). The operation data shown are data obtained when the accelerator was depressed into a fully open state to accelerate while the test vehicle was traveling along a long climbing lane at a high speed (140 km/h, for example).

In the case of this test vehicle, the gear stage when the accelerator is fully opened in this operation state is the fourth gear stage and, according to an increase in accelerator opening degree, the gear stage of the automatic transmission 3 may be shifted down to accelerate. The gear stage is shifted to the sixth gear stage, the fifth gear stage, and the fourth gear stage.

The engine revolution speed and the vehicle speed gradually increase with an increase in accelerator opening degree. When the engine revolution speed increases, the engine sound increases. The forced up-shifting may be performed by the revolution limit change control at a timing of t2, so that the automatic transmission 3 is shifted from the fourth gear stage to the fifth gear stage.

During the acceleration in the fourth gear stage, the torque (load) of the engine 2 decreases as shown by arrow A2 due to the limitation of CE. In response to it, at a later stage of the fourth gear stage, an increase in engine revolution speed becomes gradual and the acceleration of the test vehicle becomes small, so that an increase in vehicle speed will also be gradual (engine revolution speed r1, after a timing of time t1).

In such a case, although the engine sound is loud and noisy, expected acceleration cannot be obtained and there is a possibility of the driver feeling sluggish acceleration. In view of the above, the present modification (second power train control device 10) may be devised such that engine sound can be suppressed even in such a case to prevent the driver from feeling sluggish acceleration.

### (Configuration of second power train control device)

The basic configuration of the second power train control device 10 is substantially the same as that of the above-described power train control device 10 (referred to as "first power train control device 10" in the present embodiment). For example, the second power train control device 10 may also be constituted of the ECM 11, the TCM 12, the VCM 13 and the like as with the first power train control device 10, and has a similar basic configuration.

Accordingly, the same components are given the same reference symbols and the description of such components is simplified or omitted. Different components will be described in detail.

The second power train control device 10 may be configured such that, in the case in which the TCM 12 performs the revolution limit change control, when the acceleration of the automobile 1 is equal to or less than an acceleration feeling recognition boundary value set in advance, control of forcibly shifting up the automatic transmission 3 is performed at a point in time when the engine revolution speed has reached a predetermined engine revolution speed that is lower than a temporary revolution limit set by the revolution limit change control(early forced up-shift control or second forced up-shift control).

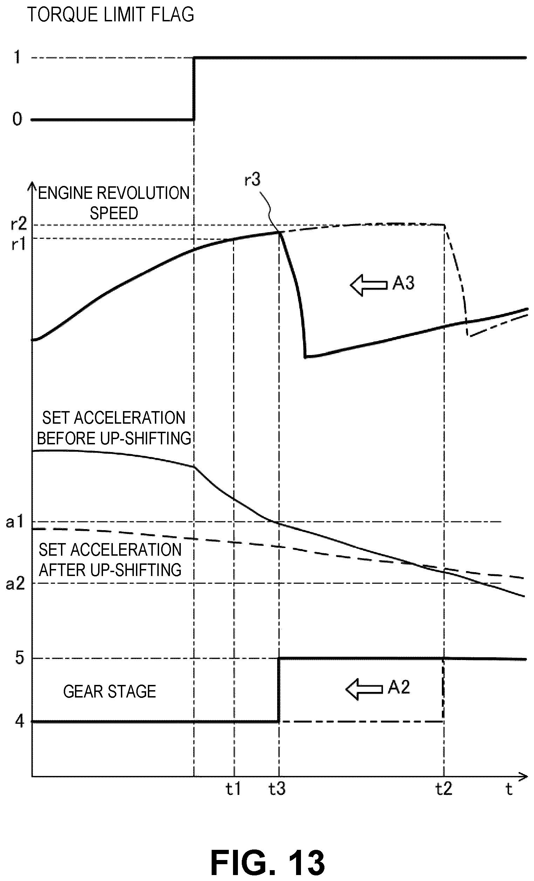

FIG. 13 shows time charts for the early forced up-shift control as an example. The time charts shown in the example correspond to the above-described operation data for the test vehicle. That is, the above-described data are again used in this time chart as a comparison example, which does not include the devising of the power train control device. Two-dot chain lines correspond to the above-described operation data of the test vehicle. Solid lines correspond to the early forced up-shift control of the present modification.

As described above, in the comparison example, the driver starts to feel sluggish acceleration at the engine revolution speed r1 and at the timing of the time t1. At the timing of t2, the forced up-shifting may be performed at the temporary revolution limit r2 by the revolution limit change control, and the automatic transmission 3 may be shifted from the fourth gear stage to the fifth gear stage.

In the second power train control device 10, as shown by arrow A2 in FIG. 13, up-shifting may be forcibly performed by the early forced up-shift control (from the fourth gear stage to the fifth gear stage) at a point in time when the engine revolution speed has reached a predetermined engine revolution speed r3, which is lower than the temporary revolution limit r2. Therefore, as shown by arrow A3 in FIG. 13, the engine revolution speed may be reduced at an early timing. In response to it, engine sound decreases. Accordingly, the driver is less likely to feel that the engine sound is noisy.

However, given that the driver obtains the feeling of acceleration, there is no possibility of the driver feeling sluggish acceleration even if engine sound is noisy. Accordingly, it may be preferable to perform up-shifting at a timing at which the driver no longer obtains the feeling of acceleration. To that end, the second power train control device 10 may set a boundary value (acceleration feeling recognition boundary value: a1) of the range of the acceleration in which the driver can recognize the feeling of acceleration, according to the operation state of the automobile. The acceleration feeling recognition boundary value a1 can be set in advance by performing tests, simulations, or the like.

When the acceleration of the automobile is higher than the acceleration feeling recognition boundary value, the driver can feel acceleration. However, when the acceleration of the automobile is lower than the acceleration feeling recognition boundary value, the driver does not feel acceleration. In FIG. 13, the forced up-shifting is performed at a point in time when the acceleration of the automobile reaches the acceleration feeling recognition boundary value (timing of t3). Accordingly, it is possible to effectively prevent the driver from feeling sluggish acceleration.

However, when the automatic transmission 3 is shifted up, the gear ratio is reduced and the acceleration changes in the direction of reduction. Thus, even when the forced up-shifting is performed at an early stage and engine sound decreases, if deceleration occurs after the up-shifting, the driver may feel discomfort. Accordingly, it is preferable to maintain the acceleration state even after the up-shifting is performed.

Thus, the second power train control device 10 may be configured such that the early forced up-shift control is performed only when the acceleration of the automobile after the up-shifting is predicted to be equal to or more than a deceleration feeling recognition boundary value set in advance.

For example, a boundary value (deceleration feeling recognition boundary value: a2) of the range of the acceleration in which the driver can recognize the feeling of deceleration may be set in the second power train control device 10 according to the operation state of the automobile. Although the deceleration feeling recognition boundary value a2 is inherently **"0** (zero)", the deceleration feeling recognition boundary value a2 is set to a positive value (0.05 m/s2, for example) including an error in practical use. The deceleration feeling recognition boundary value a2 can also be set in advance by performing tests, simulations, and the like.

In FIG. 13, the set acceleration before the up-shifting (the acceleration in the fourth gear stage) is shown by a solid line, and the set acceleration after the up-shifting (the acceleration in the fifth gear stage) is shown by a broken line. The acceleration after the up-shifting has a smaller reduction ratio (a more gradual inclination) than the acceleration before the up-shifting. Therefore, the magnitude relation between the acceleration after the up-shifting and the acceleration before the up-shifting switches in the vicinity of the timing of t2, allowing the vehicle speed to be increased by the forced up-shift control.

At the timing of t3 at which the early forced up-shift control is performed, the acceleration after the up-shifting is sufficiently higher than the deceleration feeling recognition boundary value a2. Accordingly, it is possible to maintain the acceleration state even after the up-shifting is performed. There is no possibility of the driver feeling sluggish acceleration.

The early forced up-shift control may be performed only when an engine revolution speed is at a predetermined revolution, particularly a predetermined high revolution, in a specific gear stage of the automatic transmission 3.

That is, as described above, the early forced up-shift control is effective in a specific gear stage and engine revolution speed at which the driver feels sluggish acceleration for a loud engine sound due to the execution of the forced up-shift control. Conditions for the effective control vary depending on specifications of the automobile.

In the automobile shown as the example, the engine revolution speed r3 in the fourth gear stage corresponds to the condition as described above. However, there may be cases in which predetermined engine revolution speeds such as the third gear stage, the fifth gear stage, or either of the third gear stage or the fourth gear stage correspond to the condition. However, this engine revolution speed is at a high revolution of a predetermined value or more (4000 rpm or more, for example).

Although it may be preferable to perform the early forced up-shifting when the acceleration of the vehicle is equal to or less than the acceleration feeling recognition boundary value a1, the early forced up-shifting may be performed at a timing at which the acceleration of the vehicle is more than the acceleration feeling recognition boundary value a1. For example, the early forced up-shift control may be performed at a timing at which the engine revolution speed becomes r1 or immediately after the engine revolution speed becomes r1.

### (Specific example of second power train control device)

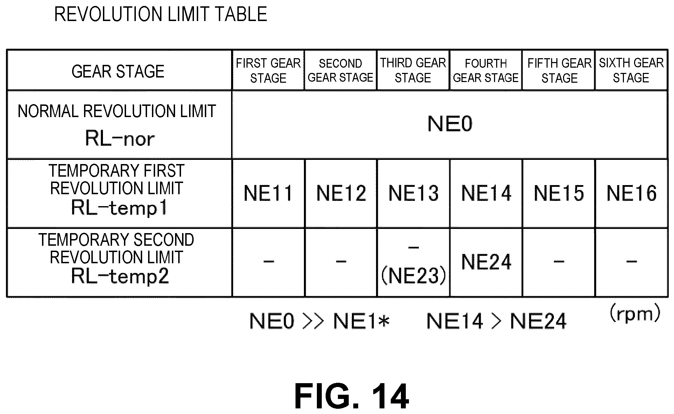

FIG. 14 shows an example of a table of revolution limits set in the second power train control device 10. Also in the second power train control device 10, a normal revolution limit (RL-nor) is set as in the first power train control device 10.

In the first power train control device 10, the temporary revolution limits (RL-temp) constituted of two revolution speeds, that is, the revolution speed for the low-speed stages (e.g., at least one of the first to third gear stages) and the revolution speed for the high-speed stages (e.g., at least one of the fourth to sixth gear stages), may be set. By contrast, in the second power train control device 10, temporary second revolution limits (RL-temp2) used in the early forced up-shift control may be set in addition to temporary first revolution limits (RL-temp1) that correspond to the temporary revolution limits (RL-temp).

In the table shown as the example, temporary first revolution limits (RL-temp1) as different revolution speeds may be set for respective gear stages (NE11 to NE16). As with the above-described temporary revolution limits (RL-temp), the first revolution speed (NE0) as the normal revolution limit (RL-nor) is sufficiently higher than the respective engine revolution speeds, which are the temporary first revolution limits (RL-temp1) (NE0 >> NE1*).

As with the above-described temporary revolution limits (RL-temp), adjacent gear stages have the same amount of decrease in temporary first revolution limit from the normal revolution limit, or an amount of decrease in temporary first revolution limit for the high gear stages from the normal revolution limit is greater than an amount of decrease in temporary revolution limit for the low gear stages from the normal revolution limit. That is, the magnitude relation between these revolution speeds for the temporary first revolution limits (RL-temp1) is NE11 ≥ NE12 ≥ NE13 ≥ NE14 ≥ NE15 ≥ NE16.

This table of revolution limits also corresponds to the above-described operation data. That is, the temporary second revolution limit (RL-temp2) may be set for the fourth gear stage of the automatic transmission **3.** An engine revolution speed NE24 as the temporary second revolution limit (RL-temp2) is smaller than a corresponding engine revolution speed NE14 as the temporary first revolution limit (RL-temp1) for the fourth gear stage (NE14 > NE24).

In the present embodiment, the case of setting the temporary second revolution limit (RL-temp2) only for the fourth gear stage is described as an example. However, as described above, the temporary second revolution limit (RL-temp2) may be set for the third gear stage depending on specifications of the automobile (NE23).

### (Specific example of control of second power train control device)

The basic configuration of control related to the forced up-shift control and the revolution limit change control for the second power train control device 10 is also similar to that of the first power train control device 10, except for the early forced up-shift control.

That is, a flowchart for the second power train control device 10 is the same as FIG. 9A in the portion corresponding to the that shown in FIG. 9A. The flowchart for the second power train control device 10 partially differs from the flowchart shown in FIG. 9B. Accordingly, the same reference symbols are directly used for the steps with the same actions, and the description of such actions is simplified or omitted.

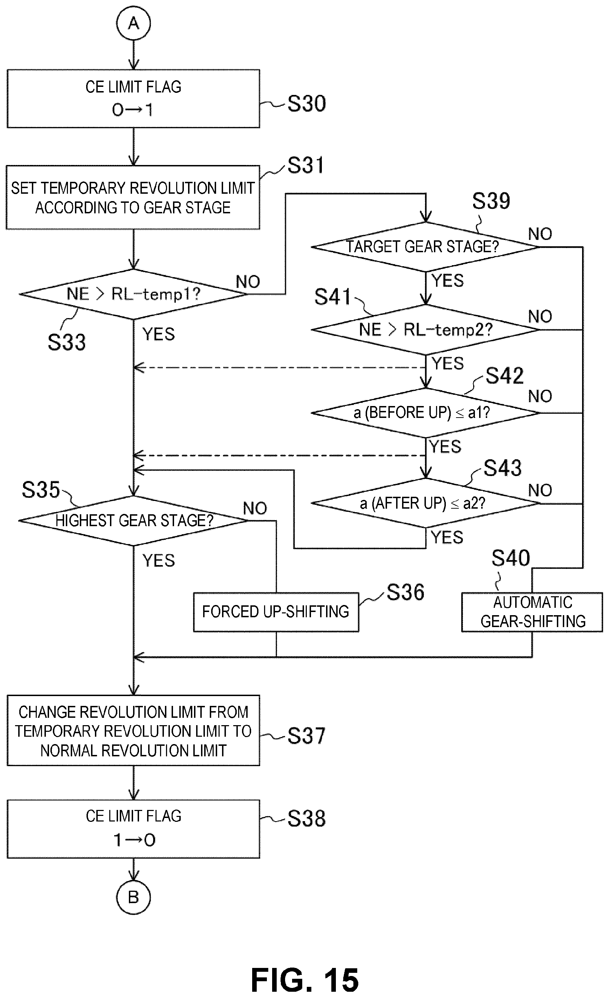

In the flowchart for the second power train control device 10 as well, when the TCM 12 receives a flag change command from the ECM 11, the TCM 12 may change the value of the CE limit flag from "0" to "1" (step S30) as shown in FIG. 15.

Next, the TCM 12 sets temporary revolution limits (RL-temp1 and RL-temp2) according to the gear stages by referencing the table of revolution limits (see FIG. 14) (step S31). In the case of the second power train control device 10, values (NE11 to NE16) for engine revolution speeds corresponding to the respective gear stages from the first gear stage to the sixth gear stage are set as the temporary first revolution limits (RL-temp1). A value (NE24) for an engine revolution speed corresponding to the fourth gear stage may be set as the temporary second revolution limit (RL-temp2).

Then, the TCM 12 may determine whether the engine revolution speed (NE) is more than the temporary first revolution limit (RL-temp1) (step S33). As a result, when the engine revolution speed is more than the temporary first revolution limit (Yes in step S33), the TCM 12 may determine whether the automatic transmission 3 is in the highest gear stage (step S35). As a result, when the automatic transmission 3 is not in the highest gear stage, the TCM 12 forcibly shifts up the automatic transmission 3 (step S36).

The automatic transmission 3 may be forcibly shifted up. Therefore, the engine revolution speed reduces. Due to the reduction in engine revolution speed, the CE limit value is relaxed, thus being increased. Therefore, power from the engine 2 can be obtained, thus increasing the engine revolution speed and the vehicle speed.

Then, the TCM 12 changes the revolution limit from the temporary first revolution limit to the normal revolution limit (step S37). The TCM 12 returns the value of the CE limit flag to the initial value again (step S38). Thereafter, the TCM 12 returns.

In contrast, when the engine revolution speed is equal to or less than the temporary first revolution limit (No in step S33), the TCM 12 may determine whether the gear stage of the automatic transmission 3 is a gear stage that is subjected to the early forced up-shift control (step S39). For example, the TCM 12 determines whether the gear stage of the automatic transmission 3 is the fourth gear stage.

As a result, when the gear stage of the automatic transmission 3 is not the fourth gear stage (No in step S39), the TCM 12 may maintain the automatic gear-shifting (step S40). The TCM 12 may then change the revolution limit from the temporary first revolution limit to the normal revolution limit (step S37), return the value of the CE limit flag to the initial value (step S38), and then returns.

In contrast, when the TCM 12 determines that the gear stage of the automatic transmission 3 is the fourth gear stage (Yes in step S39), the TCM 12 may determine whether the engine revolution speed (NE) is more than the temporary second revolution limit (RL-temp2) (step S41). As a result, when the engine revolution speed (NE) is more than the temporary second revolution limit (RL-temp2) (Yes in step S41), the TCM 12 may immediately perform the early forced up-shift control as shown by a two-dot chain line.

However, in the case of this second power train control device 10, attaching importance to driving performance, the TCM 12 compares the acceleration of the automobile 1 with the acceleration feeling recognition boundary value a1 (step S42). As a result, when the acceleration of the automobile 1 is more than the acceleration feeling recognition boundary value a1 (No in step S42), the feeling of acceleration can be obtained and hence the TCM 12 advances to step S40, where the automatic gear-shifting is maintained.

In contrast, when the acceleration of the automobile 1 is equal to or less than the acceleration feeling recognition boundary value a1 (Yes in step S42), the TCM 12 may immediately perform the early forced up-shift control as shown by a two-dot chain line. However, in the case of this second power train control device 10, for attaching importance to driving performance, it is predicted whether the acceleration of the automobile after the up-shifting becomes equal to or more than the deceleration feeling recognition boundary value a2 (step S43).

As a result, when it is predicted that the acceleration of the automobile 1 after the up-shifting does not become equal to or more than the deceleration feeling recognition boundary value a2 (No in step S43), the feeling of acceleration cannot be obtained even if the up-shifting is performed and hence the TCM 12 advances to step S40, where the automatic gear-shifting is maintained.

In contrast, when it is predicted that the acceleration of the automobile 1 after the up-shifting becomes equal to or more than the deceleration feeling recognition boundary value a2 (Yes in step S43), the feeling of acceleration can be obtained even when the up-shifting is performed and hence the early forced up-shift control is performed. That is, when the gear stage is not the highest gear stage, the TCM 12 may perform the forced up-shifting at an early timing at which the engine revolution speed is lower than the temporary first revolution limit (step S36).

Therefore, the engine revolution speed is reduced at an early timing as shown in FIG. 13. In response to it, engine sound decreases and engine sound can be suppressed. The acceleration of the automobile 1 can also be maintained within a range in which the driver can obtain the feeling of acceleration. Accordingly, there is no possibility of the driver feeling sluggish acceleration.

The present invention is not limited to the above-described embodiment and also includes various other configurations. For example, although the vehicle that is driven only by the engine 2 is described as an example in the embodiment, the vehicle may be a hybrid vehicle that also uses a motor in combination. There may be a situation in which a motor cannot be used in a hybrid vehicle.

### [Reference Signs List]

- 1: automobile (vehicle)
- 2: engine
- 3: automatic transmission
- 10: power train control device
- 11: ECM
- 12: TCM
- 13: VCM
- 20: cylinder
- 21: crankshaft
- 22: piston
- 23: combustion chamber
- 25: injection valve
- 26: spark plug
- 27: intake valve
- 28: exhaust valve
- 30: intake S-VT
- 31: exhaust S-VT
- 32: swirl control valve (SCV)
- 33: cooling water passage
- 40: intake passage
- 42: throttle valve
- 50: exhaust passage
- 51: muffler
- 52: exhaust gas purification apparatus
- 55: EGR passage
- 56: EGR valve
- 62: torque converter
- 63: transmission mechanism
- 63a: planetary gear mechanism
- 63b: clutch
- 70: accelerator opening degree sensor
- 71: vehicle speed sensor
- 72: engine revolution speed sensor
- 73: crank angle sensor
- 75: airflow sensor
- 76: cooling water temperature sensor
- 77: intake air temperature sensor
- 78: exhaust gas temperature sensor
- 80: SCV opening degree sensor
- 81: EGR valve opening degree sensor
- 82: catalyst temperature sensor
- 90: shift map

## Claims

1. A power train control device (10) for a vehicle (1) including an engine (2) that is configured to operate by burning of gasoline, an exhaust gas purification apparatus (52) that is configured to purify, using a three-way catalyst, exhaust gas exhausted from the engine (2), and an automatic transmission (3), wherein the vehicle (1) is configured to travel by controlling the engine (2) and the automatic transmission (3), the power train control device (10) comprising:
an engine control unit (11) that is configured to control operation of the engine (2) such that a theoretical air-fuel ratio is achieved over an entire operation range, and when an intake air charge amount reaches an upper limit value that is set to prevent a temperature of the three-way catalyst from exceeding an allowable temperature, limit the intake air charge amount; and
a transmission control unit (12) that is configured to control an action of the automatic transmission (3) based on a shift map which is set based on an accelerator opening degree and a vehicle speed, and when an engine revolution speed reaches a revolution limit that is set to prevent revolution of the engine (2) from exceeding an allowable limit, forcibly shift up the automatic transmission (3),
wherein when the engine control unit (11) limits the intake air charge amount, the transmission control unit (12) is configured to perform revolution limit change control of lowering the revolution limit.

2. The power train control device (10) according to claim 1, wherein
the transmission control unit (12) is configured to decrease the revolution limit more as a gear stage of the automatic transmission (3) becomes higher.

3. The power train control device (10) according to claim 1 or 2, wherein
the upper limit value of the intake air charge amount becomes smaller as at least any one of the engine revolution speed, an intake air temperature, and a temperature of cooling water in the engine (2) becomes larger.

4. The power train control device (10) according to any one of the preceding claims, wherein
the engine control unit (11) is configured to calculate the upper limit value of the intake air charge amount based on three values consisting of the engine revolution speed, the intake air temperature, and the temperature of cooling water in the engine (2), and based on a predetermined base state value.

5. The power train control device (10) according to claim 4, wherein
when a temperature of the exhaust gas is higher than a first threshold and/or when a temperature of the three-way catalyst is higher than a second threshold, the engine control unit (11) is configured to calculate the upper limit value of the intake air charge amount based on the three values consisting of the engine revolution speed, the intake air temperature, and the temperature of cooling water in the engine (2), and based on the predetermined base state value.

6. The power train control device (10) according to claim 4 or 5, wherein
the engine control unit (11) is further configured to calculate the upper limit value of the intake air charge amount based on two values consisting of the engine revolution speed and the intake air temperature, and based on the predetermined base state value.

7. The power train control device (10) according to claim 6 referring to claim 5, wherein
when the temperature of the exhaust gas is equal to or less than the first threshold and the temperature of the three-way catalyst is equal to or less than the second threshold, the engine control unit (11) is configured to calculate the upper limit value of the intake air charge amount based on two values consisting of the engine revolution speed and the intake air temperature, and based on the predetermined base state value.

8. The power train control device (10) according to any one of claims 4 to 7, wherein
the engine (2) includes a swirl control valve (32) that is configured to change a strength of a swirl flow generated in a combustion chamber (23) by adjusting an opening degree of the swirl control valve (32), and
the engine control unit (11) is configured to correct the upper limit value of the intake air charge amount based on an amount of deviation of the opening degree of the swirl control valve (32) relative to the base state value.

9. The power train control device (10) according to any one of claims 4 to 8, wherein
the engine (2) includes a variable valve timing mechanism (30, 31) that is configured to enable adjustment of an opening and/or closing timing of an intake valve (27) and/or an exhaust valve (28), and
the engine control unit (11) is configured to correct the upper limit value of the intake air charge amount based on an amount of deviation of the opening and/or closing timing of the intake valve (27) and/or the exhaust valve (28) relative to the base state value.

10. The power train control device (10) according to any one of the preceding claims 4 to 9, wherein
the engine (2) includes an EGR valve (56) that is configured to change, by adjusting an opening degree of the EGR valve (56), an amount of exhaust gas to be recirculated, and
the engine control unit (11) is configured to correct the upper limit value of the intake air charge amount based on an amount of deviation of the opening degree of the EGR valve (56) relative to the base state value.

11. The power train control device (10) according to any one of claims 4 to 10, wherein
the engine control unit (11) is further configured to performs ignition retard control of performing control in such a way as to cause a delay in ignition timing in order to suppress knocking, and
the engine control unit (11) is configured to correct the upper limit value of the intake air charge amount based on an amount of retard of the ignition timing relative to the base state value.

12. The power train control device (10) according to any one of the preceding claims, wherein
in a case in which the transmission control unit (12) performs the revolution limit change control, when an acceleration of the vehicle (1) is equal to or less than an acceleration feeling recognition boundary value set in advance, the transmission control unit (12) is configured to perform forced up-shift control of forcibly shifting up the automatic transmission (3) at a point in time when an engine revolution speed has reached a predetermined engine revolution speed that is lower than a temporary revolution limit set by the revolution limit change control.

13. The power train control device (10) according to claim 12, wherein
the transmission control unit (12) is configured to perform the forced up-shift control only in a case in which the acceleration of the vehicle (1) after **up-**shifting is predicted to be equal to or more than a deceleration feeling recognition boundary value set in advance.

14. The power train control device (10) according to claim 12 or 13, wherein
the transmission control unit (12) is configured to perform the forced up-shift control only in a case in which the engine revolution speed is at a predetermined revolution in a specific gear stage of the automatic transmission (3).

15. A vehicle (1) comprising:
the power train control device (10) according to any one of the preceding claims;
an engine (2) that is configured to operates by burning of gasoline;
an exhaust gas purification apparatus (52) that is configured to purify, using a three-way catalyst, exhaust gas exhausted from the engine (2); and
an automatic transmission (3).
